# EUROPEAN PATENT SPECIFICATION

(11) **EP 2 068 121 B1**
(45) Date of publication and mention of the grant of the patent: **22.09.2010**
(21) Application number: 07023679.9
(22) Date of filing: 06.12.2007
(51) Int. Cl.: G01C 21/34

(54) **Navigation system including route guidance function and method of providing route guidance to a user**
Navigationssystem mit Routenführungsfunktion und Verfahren zur Bereitstellung der Routenführung für einen Benutzer
Système de navigation comprenant une fonction d'orientation routière et procédé de fourniture d'orientation routière à un utilisateur

(43) Date of publication of application: 10.06.2009
(73) Proprietor: Alpine Electronics, Inc., Tokyo (JP)
(72) Inventor: Galos, Andreas, 70567 Stuttgart (DE)
(74) Representative: Klunker . Schmitt-Nilson . Hirsch

(56) References cited:
- JP-A- 2006 113 836
- US-A- 5 737 225
- US-A1- 2001 037 173
- US-A1- 2004 267 455
- US-A1- 2005 115 753
- US-A1- 2006 142 941

## Description

### Background of the Invention

### Field of the Invention

The present invention is directed to a navigation system including route guidance function comprising a route processing unit adapted for calculating a route to a destination and providing information to the user regarding the route, wherein the route has at least one maneuver point at which the user is required to make a maneuver from a movement in a first direction to a movement in a second direction. The invention is further directed to a method of providing route guidance to a user, comprising the step of calculating a route to a destination and providing information to the user regarding the route, thereby determining at least one maneuver point at which the user is required to make a maneuver from a movement in a first direction to a movement in a second direction. The maneuver point may be, for example, a location where the user is required to leave the road on which the user is travelling.

### Description of the Related Art

A commonly known navigation system detects the position of a user for performing route guidance to a destination which the user has entered into the navigation system. For example, a navigation system detects the position of a vehicle the user is using for travelling, wherein the current position of the vehicle is typically detected by using a navigation sensor in the vehicle, a receiver such as a GPS (Global Positioning System) receiver, and map data corresponding to an area surrounding the detected position. Generally, a navigation system may display a map image on a display screen and may display a mark indicating the current position of the vehicle or the user, respectively. The navigation system can search for a route by means of a route processing unit which calculates a route from a start point to a destination. As the current position of the vehicle changes with the movement of the vehicle, the vehicle position mark is moved along the route on the display screen, or a map image adjacent to the vehicle is scrolled while the vehicle position mark persists at a predetermined point on the display screen. When the vehicle approaches a determined maneuver point on the route at which the user is required to make a maneuver from a movement in a current direction to a movement in another direction, for example when changing a road on which the user is travelling, the route processing unit provides information to the user regarding the route which indicates the maneuver point, for example indicates that the user has to leave the road on which he or she is travelling. For example, the display screen shows an arrow which indicates the direction the user has to take at the maneuver point, for example indicating that the user has to leave the highway on which he or she is travelling at the next exit on the right. As an alternative or additionally, the navigation system may also indicate the maneuver point to the user by means of voice output.

In JP 2001-227965 A there is disclosed a navigation device which executes route guidance to a destination and which has a detour search means searching for the detours, a detour display means displaying the detour searched by the detour searching means, and a detour selection means for allowing an operator to select a desired detour from the displayed detours. A detour guidance means executes the route guidance of the detour selected by the detour selection means.

In EP 0 587 892 A1 there is disclosed a navigation apparatus to be mounted on a mobile body, in which a processor produces at least two possible routes to a destination and displays the present position, the destination and the possible routes on a screen of a display. Further, connecting routes existing between two or more possible routes can be retrieved and displayed. When the present position of the vehicle changes, the possible routes must be determined between a new present position and the destination. The display of two or more possible routes has the effect that the driver need not strictly follow one route so that the driver may conveniently decide which of the routes he or she takes. With display of a connecting route, the possible routes can easily be changed.

In JP 2006 113836 A there is disclosed a road information providing system for acquiring information of the difficulty of travelling on a road, and for providing the information to another vehicle. Particularly, it is disclosed that a driver can select avoiding or not avoiding bumpy roads by user setup. Information of a road which is not recognizable unless a vehicle actually travels may be provided to another vehicle.

In US 2001/037173 A1, there is disclosed a vehicle safety running apparatus, in which, when a route guidance by a navigation system is not in operation, a determination on passableness is carried out as a target on a branch road of a plurality of branch roads branched from an intersection ahead of the subject vehicle which has lowest with respect to the degree of difficulty in running or a branch road having a smallest intersection angle formed by a road on which the subject vehicle is advancing and the branch road and a curve on the branchroad. An automatic deceleration control can be performed or an alarm can be given to the driver even when the route guidance is not in operation.

In some situations, a user of a navigation system may travel at a rather high speed, for example when the user's vehicle is travelling on a highway permitting high speeds, so that the vehicle has to decelerate from the high speed to a lower speed in order to take a maneuver point on the route such as an exit of the highway. Under such conditions, a situation may occur in which the information regarding the maneuver point is provided to the user in a rather close distance to the maneuver point taking into account the rather high speed the user is currently travelling at. If the user wants to take the indicated maneuver of the route at the maneuver point, a rather high deceleration, i.e. strong braking of the vehicle, is necessary so that the vehicle may reduce its speed to the speed which is allowed or reasonable for making the maneuver.

Such situation may cause mental stress to the driver of a vehicle because the driver has to decide whether he or she must brake strongly in either case in order for the driver to make the maneuver, since it is not indicated to the driver what the consequences are if the maneuver point is missed, for example in a situation where strong braking is not possible. If the driver decides to miss the maneuver point because the maneuver point is too close, the navigation system will proceed to calculate a new route after the maneuver point is actually missed. This again may cause mental stress to the driver as the driver is in an unclear condition for the time period in which the navigation system calculates the new route, which calculation may take up to several seconds or minutes depending on the processing performance of the navigation system. On the other hand, if the driver of a vehicle decides to brake strongly in order to make the maneuver, this may cause a dangerous situation to the driver himself or herself and to other vehicles.

### Summary of the invention

It is therefore an object of the present invention to provide a navigation system including route guidance function which is capable of providing information to a user, such as a driver of a vehicle, which may serve to reduce the user's men-tal stress when approaching a maneuver point on a route to a destination. A further object of the invention is to provide a corresponding method of providing route guidance to a user.

The invention is directed to a navigation system including route guidance function according to the features of claim 1. Further, the invention is directed to a method of providing route guidance to a user according to the features of claim 15.

According to the invention, there is provided a navigation system including route guidance function, comprising a route processing unit adapted for calculating a first route to a destination and providing information to the user regarding the first route, thereby determining at least one maneuver point at which the user is required to make a maneuver from a movement in a first direction to a movement in a second direction, and comprising a deceleration calculating unit adapted for receiving information regarding the at least one maneuver point, and which is adapted for calculating, at a user's current speed, a deceleration value which is currently required for the user to make the maneuver at a reduced speed. The deceleration calculating unit is adapted for determining whether the deceleration value exceeds a predetermined reference value. The route processing unit is adapted for calculating a second route to the destination as an alternative to the first route, wherein according to the second route the user is not required at the maneuver point to make the maneuver. Moreover, the route processing unit is adapted for providing information to the user regarding the second route in the event that the deceleration value exceeds the predetermined reference value.

Therefore, according to the invention, the navigation system provides an information to the user which may reduce the mental stress for the driver of a vehicle which is approaching a maneuver point with rather high speed, since the driver can see before reaching the maneuver point whether there is an alternative route to the first route. Therefore, with providing the information to the user regarding the second route as an alternative to the first route, the driver of the vehicle can realize that a strong braking is not necessary as there is a second route which leads the driver to the destination. According to the invention, the information regarding the alternative route is provided to the user before reaching the maneuver point in the event that the deceleration value which is currently required for the user to make the maneuver exceeds the predetermined reference value. In other words, at the time at which the system determines that the user has to brake strongly so that the deceleration value exceeds the predetermined reference value, the system immediately provides the information regarding the alternative route, so that the user may immediately realize the consequences of missing the maneuver point and that there is an alternative route to the destination. Thus, the user may decide that strong braking is not necessary because there is an alternative route, which may increase the user's safety and that of other vehicles.

In a further aspect of the invention, the method of providing route guidance to a user comprises the steps of calculating a first route to a destination and providing information to the user regarding the first route, thereby determining at least one maneuver point at which the user is required to make a maneuver from a movement in a first direction to a movement in a second direction, calculating a deceleration value which is currently required for the user to make the maneuver, determining whether the deceleration value exceeds a predetermined reference value, and calculating a second route to the destination as an alternative to the first route, wherein according to the second route the user is not required at the maneuver point to make the maneuver. In the event that the deceleration value exceeds the predetermined reference value, the method comprises the step of providing information to the user regarding the second route.

According to an embodiment of the invention, the deceleration calculating unit is coupled with a vehicle speed sensor for determining a current speed of the user's movement, wherein the deceleration calculating unit is adapted for calculating the deceleration value by determining a distance of a current user's position to the maneuver point and by determining the current speed. For example, the deceleration calculating unit is permanently calculating the deceleration which is currently required for the user to make the maneuver by monitoring the current distance to the maneuver point and the current moving speed. In the event that the deceleration value exceeds the predetermined reference value, i.e. the deceleration forecast is rising above the predetermined reference value as a critical limit for heavy braking, the system predicts that the user will miss the next maneuver point so that an alternative route is offered immediately.

According to an embodiment of the invention, the route processing unit is adapted for calculating the second route triggered by the event that the deceleration value exceeds the predetermined reference value. This embodiment is especially applicable in navigation systems having high processing performance and which are capable of providing the alternative route to the user in a rather short time. According to another embodiment, the route processing unit is adapted for calculating the second route simultaneously to providing the information to the user regarding the first route. For example, the route processing unit is permanently calculating an alternative or multiple alternative routes for the case of missing the next maneuver point. This provides the advantage that information regarding the alternative route may be provided to the user immediately after detecting that the required deceleration rises above the critical limit.

According to another embodiment of the invention the route processing unit may be adapted for providing information to the user regarding an additional time and/or additional distance required for the user when travelling on the second route instead of the first route, the additional time and/or additional distance being provided with respect to travelling on the first route.

According to another embodiment of the invention, the route processing unit is adapted for providing data to a display screen for providing graphical information to the user regarding the first route and the second route. Accordingly, the user can see at one glance the information on the maneuver point of the first route and the information regarding the alternative route when approaching the maneuver point. According to an alternative embodiment, the information to the user regarding the first route and the second route may be provided by voice output in addition to or instead of providing graphical information. Therefore, the invention is also applicable to a navigation system including voice guidance function and to a method of providing route guidance to a user by means of voice guidance.

According to another embodiment of the invention, the deceleration calculating unit is adapted for setting the predetermined reference value depending on at least one adjustable parameter which is indicative of at least one of the following: A condition of a road on which the user is travelling, a traffic situation on a road on which the user is travelling, and a type of vehicle the user is using for travelling. For example, when the road on which the user is travelling is wet and/or slippery, the predetermined reference value as the critical deceleration level is reduced taking into account that the braking process when approaching the maneuver point has to take place at a lower deceleration value so as to avoid a dangerous situation. This has the effect that the point on the route at which the alternative route is communicated to the user is brought forward as compared to normal conditions of the road.

Likewise, if on the road on which the user is travelling the traffic situation indicates heavy traffic, the possible deceleration is reduced as not to imperil the traffic behind the vehicle, so that in this situation the predetermined reference value may also be reduced. According to another situation, if the time of day situation is indicative of a dawn or night situation, the predetermined reference value may also be reduced taking into account that heavy braking at night or dawn time is more dangerous than heavy braking at daytime. According to another embodiment, if the road class of the road on which the user is travelling indicates a lower road class (lower functional class) of a plurality of road classes, for example being indicative of a freeway, highway, Autobahn or the like, the predetermined reference value may be reduced taking into account that heavy braking on such roads is more dangerous than heavy braking on smaller local roads having a higher functional class. According to another embodiment, if a current weather condition is indicative of a rain and/or a temperature near the freezing point the frictional coefficient between vehicle and the road surface is reduced, so that a predetermined reference value is also reduced taking into account that the deceleration to the maneuver point has to take place at a lower level in order to prevent dangerous situations. In another embodiment, the type of vehicle may also be taken into account. For example, for a sports car, the predetermined reference value may be rather high taking into account that the sports car is capable of performing rather high deceleration values, i.e. heavy braking, whereas a utility vehicle such as a van should not be brought into the situation of heavy braking, so that the predetermined reference value is reduced in this case.

Further advantageous features and embodiments of the invention are evident from the dependent claims.

### Brief Description of the Drawings

The invention will now be explained in view of the accompanying drawings for illustrating various embodiments of the invention, in which
- Figure 1: is a schematic diagram of an exemplary on-vehicle navigation sys- tem according to an embodiment of the present invention;
- Figure 2: illustrates schematic screen outputs of a display screen of a naviga- tion system according to an embodiment of the invention;
- Figure 3: illustrates another embodiment of screen outputs of a display screen of a navigation system according to an embodiment of the invention;
- Figure 4: shows various examples of screen outputs of a navigation device according to the known art.

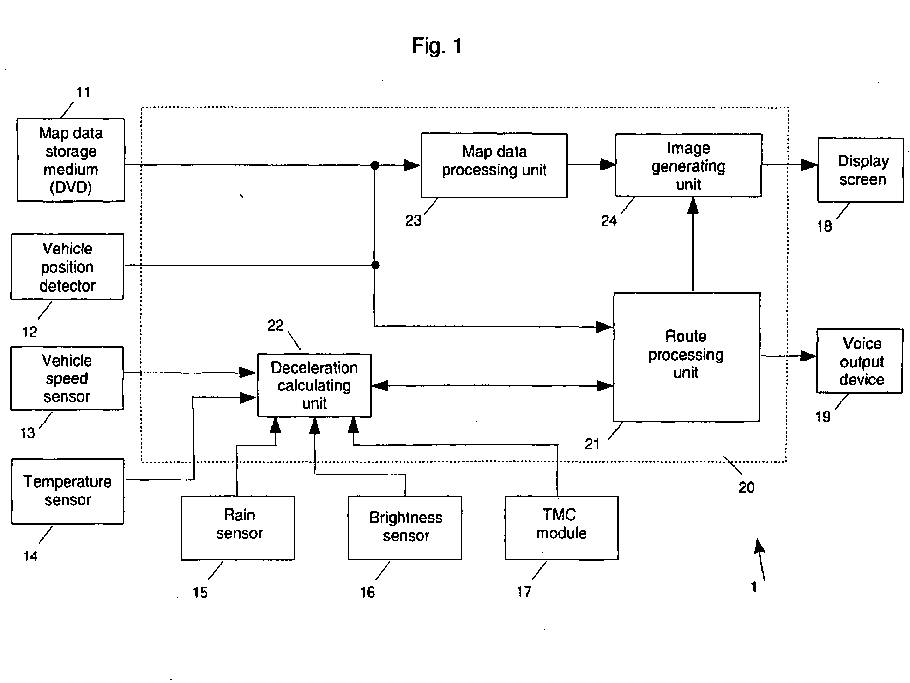

In Figure 1, there is illustrated a general schematic diagram of an exemplary on-vehicle navigation system 1 according to an embodiment of the present invention. The navigation system 1 includes an external map data storage medium 11 for storing map information, such as a DVD, storing map data for displaying on a display screen. Reference numeral 20 denotes a navigation control device which comprises sub-units, as explained in more detail below, which generate a map image around the vehicle position using the map data, and perform route searching and calculating for finding an optimal path for a route to be searched to a destination. From the map data storage medium 11, which is under control of a corresponding DVD control device (not shown), map information available is loaded into a map data processing unit 23 which may include internal memory for storing corresponding map data. The map data processing unit 23 is connected with an image generating unit 24 for generating a map image on a display device 18, such as a display screen. The image generating unit 24 reads a set of relevant map data from the map data processing unit 23 and produces corresponding signals to be provided to the display screen 18. The image generating unit 24 may include a suitable circuitry for composing a map image including, for example, a vehicle position mark indicating the current vehicle position superimposed on the map image. To this end, a vehicle position detector 12 is also connected with the map data processing unit 23 which provides corresponding signals to the image generating unit 24. The image generating unit 24 also serves for superimposing a path of a searched route, or multiple paths of multiple searched routes, onto the map image, for example in a manner that the route path(s) is (are) highlighted in order for the user to easily distinguish the route(s) from the remainder of the displayed map data.

The navigation control device 20 further includes a route processing unit 21 coupled with the image generating unit 24 for searching a route leading to a destination and for generating a guide route image on the basis of route data calculated in the route search process. Additionally or alternatively, the route processing unit 21 may also be connected with a voice output device 19 for providing voice guidance according to corresponding route data provided by the route processing unit 21. The map data processing unit 23 and the route processing unit 21 are both connected with the vehicle position detector 12, so that the map image displayed on the display screen 18 and the route guidance by means of the display screen 18 and/or by means of the voice output device 19 may be generated in accordance with the vehicle's motion and position.

The navigation system 1 according to the embodiment as shown in Figure 1 also includes a deceleration calculating unit 22 which is adapted for receiving information from the route processing unit 21 regarding a searched route. According to the present embodiment, the deceleration calculating unit 22 is coupled with the route processing unit 21. The deceleration calculating unit 22 particularly receives information regarding at least one maneuver point on the route calculated by route processing unit 21, typically the next maneuver point on the current route, and is further coupled with a vehicle speed sensor 13 for determining a current speed of the vehicle's movement. The deceleration calculating unit 22 calculates a deceleration value which is currently required for the user to make the maneuver at the next maneuver point, as explained in more detail below. To this end, the deceleration calculating unit 22 calculates the deceleration value by determining the distance of the vehicle's current position to the maneuver point and by determining the current speed received from the vehicle speed sensor 13.

The deceleration calculating unit 22 may also be coupled with a temperature sensor 14 for determining, for example, the current condition of the road on which the user is travelling or the current weather condition. For example, the temperature sensor 14 may indicate a temperature of the ambient air which is near the freezing point which may be indicative of a slippery road due to ice or snow. Further, the deceleration calculating unit 22 may be coupled with a rain sensor 15 which is also capable for determining the current condition of the road on which the vehicle is travelling or the current weather condition. For example, if the rain sensor indicates rain, this is indicative of a wet road surface which is, in turn, indicative of a decreased frictional coefficient between the vehicle and the road surface.

According to another embodiment, the deceleration calculating unit 22 may be connected with a brightness sensor 16 for determining a time of day situation, or for determining when the vehicle is travelling through a tunnel or the like. The deceleration calculating unit 22 may take this into account in that in a dawn or night situation, or when the vehicle travels through a tunnel, heavy braking is more dangerous than at daytime or, more generally, in situations with rather bright ambient light.

According to another embodiment, the deceleration calculating unit 22 may be coupled with a TMC module 17 which is capable of receiving and processing traffic information such as traffic information according to the TMC (Traffic Message Channel) standard. In this concern, any other module for receiving traffic information according to another standard may also be used. The TMC module 17 may be appropriate for indicating to the deceleration calculating unit 22 if heavy traffic occurs on the road on which the vehicle is travelling, taking into account that heavy braking under such conditions is more dangerous than under normal conditions.

The information from any of the sensors 13 to 16 and the TMC module 17 is processed by the deceleration calculating unit 22 in that the predetermined reference value for the calculated deceleration value is appropriately set, i.e. reduced or increased, respectively, depending on the respective situation indicated by any of the sensors and/or the TMC module as described above.

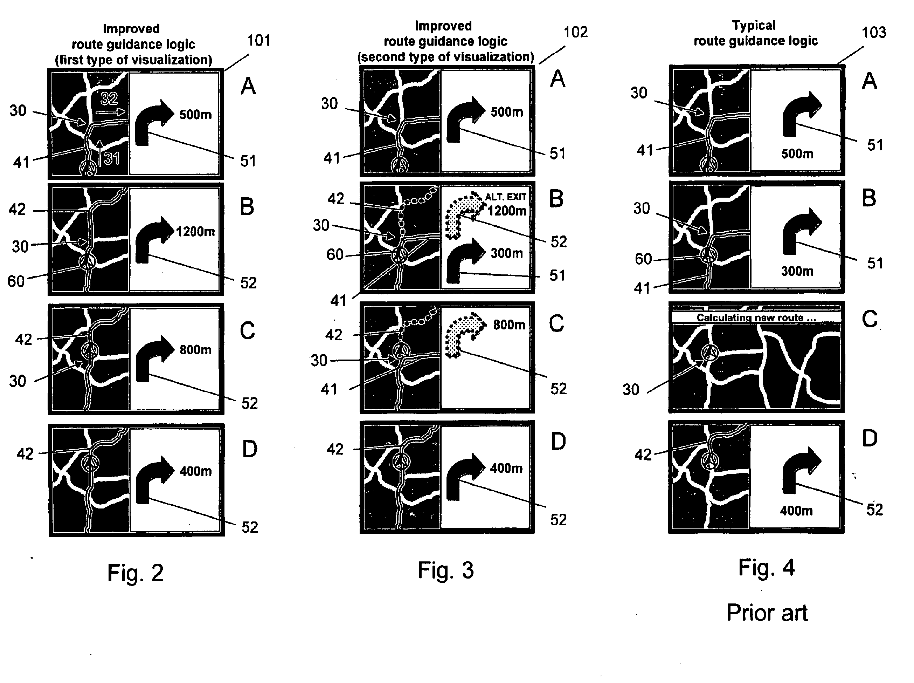

According to the exemplary screen outputs shown in Figure 4, the operation of a conventional navigation system shall be explained in more detail. The screen outputs 103 as shown in Figure 4 may be displayed on a display screen of a navigation device which is capable of providing so-called split screen function. On the left hand side of screen output 103 according to Figure 4A, there is shown a part of a map indicating various roads and a highlighted route 41 calculated by a route processing unit of the navigation system. According to the route 41 as shown in Figure 4A, the route processing unit has determined a maneuver point 30 at which the user is required to make a maneuver from the road on which he or she is travelling in a first direction to a movement in another almost perpendicular direction, for example when changing the road. On the right hand side of the screen output 103, an information 51 regarding the route 41 is shown in the form of an arrow which indicates a right turn in 500 m at the maneuver point 30.

As shown in Figure 4B, as the vehicle indicated by vehicle position indicator 60 approaches the maneuver point 30, the information 51 regarding the route 41 changes to an arrow 51 indicating a destination to the maneuver point of 300 m. In the situation that the vehicle is travelling at rather high speed, the distance of 300 m may be a rather close distance so that the driver is requested to brake rather strongly in order to make the maneuver at the maneuver point 30. In other words, the deceleration value which is currently required for the driver to make the maneuver at the maneuver point 30 is rather high. In this situation, the driver may be under rather high mental stress because the driver does not know whether he or she must brake strongly in either case in order to make the maneuver at the maneuver point 30.

If the driver decides to perform heavy braking in order to make the maneuver, this may cause danger to the driver himself or herself and to other vehicles. On the other hand, if the driver decides to miss the maneuver point 30, for example to miss the exit from the road on which the vehicle is travelling, the navigation system will calculate, as shown in Figure 4C, a new route after the exit is actually missed. This situation may again cause mental stress to the driver because the driver is in an unclear condition for a while until the new route is calculated and shown, as illustrated in Figure 4C and 4D. According to Figure 4D, the user is then provided with a new route 42 shown on the map display and also with information 52 regarding the new route 42 which indicates that the driver has to take an exit in 400 m according to the new route.

As illustrated in the following according to Figures 2 and 3, these mental stress situations for the driver are avoided as follows:

As shown in Figures 2A and 3A, the route processing unit 21 according to Figure 1 has calculated a first route 41 to a destination and provides information 51 in the form of an arrow to the user regarding the first route 41, indicating in the present example that the next maneuver point 30 is at a distance of 500 m and the driver has to make a right turn at the maneuver point 30. The deceleration calculating unit 22 is in the process of calculating at the current speed a deceleration value which is currently required for the user to make the maneuver at the maneuver point 30 at a reduced speed. The deceleration calculating unit 22 determines whether the deceleration value exceeds a predetermined reference value. For example, the deceleration calculating unit 22 is permanently calculating the necessary deceleration to the next maneuver point 30 by monitoring the distance of the vehicle to the maneuver point 30 and by determining the current driving speed received from the vehicle speed sensor 13. The deceleration calculating unit 22 is also permanently calculating a second route to the destination as an alternative to the first route 41, wherein according to the second route the user is not required at the maneuver point 30 to make the maneuver. For example, the route processing unit 21 calculates the second route under the assumption that at the maneuver point 30 the maneuver from the movement in the current direction 31 to a movement in the direction 32 is not made by the user, i.e. assuming that the vehicle is driving straight on the road the vehicle is currently travelling on.

Figures 2B and 3B show a respective situation when approaching the exit at maneuver point 30 at high speed (calculated required deceleration is greater than critical deceleration according to predetermined reference value). If the vehicle is approaching the maneuver point 30 at sufficiently slow speed, i.e. the calculated deceleration value is lower than the reference value, a regular guidance screen is shown as depicted in Figure 4B.

According to the embodiments as shown in Figures 2B and 3B, in the event that the calculated deceleration value exceeds the predetermined reference value as a critical limit for braking, the information regarding the second route 42 is provided to the user on the map portion of screen outputs 101 and 102, respectively, and in the form of an arrow 52 indicating that the next maneuver point on the alternative route 42 is in 1200 m.

According to the embodiment of Figure 2B, the route processing unit 21 switches from providing the information 51 regarding the first route 41 to providing the information 52 regarding the second route 42 in the event that the calculated deceleration value exceeds the predetermined reference value (i.e. heavy braking is necessary) before reaching the maneuver point 30. In this way, the driver sees at one glance that an alternative route 42 exists if he or she misses the maneuver point 30 and that heavy braking is not necessarily required. Furthermore, as shown in Figures 2C and 3C, as soon as the vehicle indicated by the vehicle position indicator 60 has missed the maneuver point 30, the driver is immediately provided with the information 52 regarding the alternative route, thus avoiding a blank screen as shown in Figure 4C which is provided to the user according to the prior art when the route processing unit calculates a new route.

According to the embodiment as shown in Figure 3B, the route processing unit 21 provides the information 52 regarding the second route 42 simultaneously to providing the information 51 regarding the first route 41 in the event that the deceleration value exceeds the predetermined reference value before reaching the maneuver point 30. In other words, the information 51 and 52 in the form of the arrows 51 and 52 is shown simultaneously, thus providing the information to the driver that he or she has the alternatives of (1) braking rather strongly at a rather high deceleration value for taking the exit in 300 m at maneuver point 30, or (2) avoiding a dangerous situation by rather taking the exit in 1200 m according to route 42 displayed simultaneously on the map image of the display screen 102.

As soon as the driver has missed the maneuver point 30, the route processing unit 21 only displays the information regarding the second route 42 and the corresponding information 52 indicating that the next exit on route 42 is in 400 m, as shown in Figures 2D and 3D.

Therefore, according to the invention if the deceleration forecast calculated by deceleration calculating unit 22 for making the next maneuver is rising above a critical limit indicated by a corresponding predetermined reference value, the system predicts that the user may miss this maneuver point, such as an exit of a road, wherein in this situation the system immediately offers an alternative route even before reaching the maneuver point. This provides the advantage of reduced mental stress for the driver as he or she is always knowing an alternative route if he or she is likely to miss the next maneuver due to high speed driving. As a further advantage, there is no time lost for route re-calculation after the maneuver point is missed as the alternative route is already available at this point of time. In this way, when a vehicle is approaching, e.g., an exit of a highway at rather high speed and it is difficult for the driver to take the exit without heavy braking, the navigation system automatically provides the driver with further information regarding an alternative route in a way as shown in Figures 2B and 3B.

The prior art as mentioned in the introductory portion, according to which a processor displays the multiple possible routes on a screen of a display device always simultaneously, has the disadvantage that the driver may be provided with unnecessary amount of information when the driver travels on a preferred route. Accordingly, this may contribute to a information overload presented to the driver, which may increase the driver's distraction during driving and which may also cause a driver's uncertainty as to which of the displayed routes should be followed by the driver.

On the other hand, according to the present invention, the additional information regarding the second route is only provided to the driver in the situation when it is determined that the deceleration value exceeds the predetermined reference value, so that in other (normal) situations the driver is only provided with the necessary information of a single route, thus decreasing the amount of information in normal situations.

The screen outputs 101 and 102 of Figures 2 and 3 are shown in the present example as split screen outputs. However, the information 51 and 52 regarding one or both of the routes 41 and 42 may be provided to the user by only a map image with a highlighted route without an accompanying arrow image or, alternatively, by an arrow or other suitable image as shown, without an accompanying map image. Another embodiment may comprise an additional or sole voice output for providing the information 51 and 52 to the user in addition to or without any graphical information.

While the invention has been described with reference to exemplary embodiments, it will be understood by those skilled in the art that various changes may be made and equivalence may be substituted for elements or features thereof without departing from the scope of the claims. Therefore, it is intended that the invention not be limited to the particular embodiments disclosed, but that the invention will include all embodiments falling within the scope of the appended claims.

## Claims

1. A navigation system (1) including route guidance function, comprising
- a route processing unit (21) adapted for calculating a first route (41) to a destination and providing information (51) to the user regarding the first route (41), thereby determining at least one maneuver point (30) at which the user is required to make a maneuver from a movement in a first direction (31) to a movement in a second direction (32),
**characterized by**
- a deceleration calculating unit (22) adapted for receiving information regarding the at least one maneuver point (30), and which is adapted for calculating a deceleration value which is , at a user's current speed, required for the user to make the maneuver at a reduced speed by monitoring a distance of the current user's position (60) to the maneuver point (30) and the current moving speed,
- wherein the deceleration calculating unit (22) is adapted for determining whether the deceleration value exceeds a predetermined reference value,
- wherein the route processing unit (21) is adapted for calculating a second route (42) to the destination as an alternative to the first route (41), wherein according to the second route (42) the user is not required at the maneuver point (30) to make the maneuver,
- wherein the route processing unit (21) is adapted for providing information (52) to the user regarding the second route (42) in the event that the deceleration value exceeds the predetermined reference value.

2. The navigation system according to claim 1, wherein
the deceleration calculating unit (22) is coupled with a vehicle speed sensor (13) for determining the current moving speed of the user's movement.

3. The navigation system according to claim 1 or 2, wherein
the route processing unit (21) is adapted for calculating the second route (42) triggered by the event that the deceleration value exceeds the predetermined reference value.

4. The navigation system according to claim 1 or 2, wherein
the route processing unit (21) is adapted for calculating the second route (42) simultaneously to providing the information (51) to the user regarding the first route (41).

5. The navigation system according to one of claims 1 to 4, wherein
the route processing unit (21) calculates the second route (42) under the assumption that at the maneuver point (30) the movement in the second direction (32) is not taken by the user.

6. The navigation system according to one of claims 1 to 5, wherein
the deceleration calculating unit (22) is adapted for setting the predetermined reference value depending on at least one adjustable parameter which is indicative of at least one of the following:
- a condition or a type of a road on which the user is travelling,
- a traffic situation on a road on which the user is travelling,
- a type of vehicle the user is using for travelling.

7. The navigation system according to one of claims 1 to 6, wherein
the deceleration calculating unit (22) is adapted for dynamically setting the predetermined reference value depending on at least one determined parameter which is indicative of at least one of the following:
- a current condition of a road on which the user is travelling,
- a road class of a road on which the user is travelling,
- a current traffic situation on a road on which the user is travelling,
- a time of day situation,
- a current weather condition.

8. The navigation system according to claim 7, wherein
the deceleration calculating unit (22) is adapted for reducing the predetermined reference value in at least one of the following situations:
- the current condition of the road on which the user is travelling is wet and/or slippery,
- the road class of the road on which the user is travelling indicates a lower road class of a plurality of road classes,
- the current traffic situation on the road on which the user is travelling indicates heavy traffic,
- the time of day situation is indicative of a dawn or night situation,
- the current weather condition is indicative of rain and/or a temperature near the freezing point.

9. The navigation system according to one of claims 6 to 8, wherein
the deceleration calculating unit (22) is coupleable with at least one of the following components:
- a rain sensor (15) for determining the current condition of the road on which the user is travelling or the current weather condition,
- a temperature sensor (14) for determining the current condition of the road on which the user is travelling or the current weather condition,
- the route processing unit (21) for determining the road class of the road on which the user is travelling,
- a traffic information receiving unit (17) for determining the current traffic situation of the road on which the user is travelling,
- a brightness sensor (16) for determining the time of day situation.

10. The navigation system according to one of claims 1 to 9, wherein
the route processing unit (21) is adapted for providing information to the user regarding an additional time and/or additional distance required for the user when travelling on the second route (42) with respect to the first route (41).

11. The navigation system according to one of claims 1 to 10, wherein
the route processing unit (21) is adapted for providing data to a display device (18) for providing graphical information (51, 52) to the user regarding the first route (41) and the second route (42).

12. The navigation system according to one of claims 1 to 11, wherein
the route processing unit (21) is adapted for providing the information (52) regarding the second route (42) simultaneously to providing the information (51) regarding the first route (41) in the event that the deceleration value exceeds the predetermined reference value before reaching the maneuver point (30).

13. The navigation system according to one of claims 1 to 11, wherein
the route processing unit (21) is adapted for switching from providing the information (51) regarding the first route (41) to providing the information (52) regarding the second route (42) in the event that the deceleration value exceeds the predetermined reference value before reaching the maneuver point (30).

14. The navigation system according to one of claims 1 to 13, wherein
the navigation system (1) is implemented on a vehicle.

15. A method of providing route guidance to a user, comprising
- calculating a first route (41) to a destination and providing information (51) to the user regarding the first route, thereby determining at least one maneuver point (30) at which the user is required to make a maneuver from a movement in a first direction (31) to a movement in a second direction (32),
**characterized by**
- calculating a deceleration value which is , at a user's current speed, required for the user to make the maneuver at a reduced speed by monitoring a distance of the current user's position (60) to the maneuver point (30) and the current moving speed,
- determining whether the deceleration value exceeds a predetermined reference value,
- calculating a second route (42) to the destination as an alternative to the first route (41), wherein according to the second route (42) the user is not required at the maneuver point (30) to make the maneuver,
- in the event that the deceleration value exceeds the predetermined reference value, providing information (52) to the user regarding the second route (42).

## Patentansprüche

1. Navigationssystem (1) mit Routenführungsfunktion, aufweisend:
- eine Routenverarbeitungseinheit (21), die angepasst ist, eine erste Route (41) zu einem Ziel zu berechnen und Information (51) an den Nutzer betreffend die erste Route (41) bereitzustellen, wobei dabei wenigstens ein Manövrierpunkt (30) bestimmt wird, an dem der Nutzer ein Manöver aus einer Bewegung in einer ersten Richtung (31) in eine Bewegung in einer zweiten Richtung (32) machen muss,
**gekennzeichnet durch**
- eine Verzögerungsberechnungseinheit (22), die angepasst ist, Information betreffend den wenigstens einen Manövrierpunkt (30) zu empfangen, und welche angepasst ist, einen Verzögerungswert zu berechnen, welcher bei einer gegenwärtigen Geschwindigkeit des Nutzers erforderlich ist, damit der Nutzer das Manöver mit einer reduzierten Geschwindigkeit vornehmen kann, indem eine Distanz der gegenwärtigen Position des Nutzers (60) bis zu dem Manövrierpunkt (30) und die gegenwärtige Bewegungsgeschwindigkeit aufgenommen werden,
- wobei die Verzögerungsberechnungseinheit (22) angepasst ist zu bestimmen, ob der Verzögerungswert einen vorbestimmten Referenzwert überschreitet,
- wobei die Routenverarbeitungseinheit (21) angepasst ist, eine zweite Route (42) zu dem Ziel als eine Alternative zu der ersten Route (41) zu berechnen, wobei gemäß der zweiten Route (42) der Nutzer an dem Manövrierpunkt (30) das Manöver nicht vornehmen muss,
- wobei die Routenverarbeitungseinheit (21) angepasst ist, Information (52) an den Nutzer betreffend die zweite Route (42) bereitzustellen in dem Fall, dass der Verzögerungswert den vorbestimmten Referenzwert überschreitet.

2. Navigationssystem nach Anspruch 1, wobei die Verzögerungsberechnungseinheit (22) mit einem Fahrzeuggeschwindigkeitssensor (13) zur Bestimmung der gegenwärtigen Bewegungsgeschwindigkeit der Bewegung des Nutzers gekoppelt ist.

3. Navigationssystem gemäß Anspruch 1 oder 2, wobei die Routenverarbeitungseinheit (21) angepasst ist, die zweite Route (42) zu berechnen ausgelöst durch den Fall, dass der Verzögerungswert den vorbestimmten Referenzwert überschreitet.

4. Navigationssystem gemäß Anspruch 1 oder 2, wobei die Routenverarbeitungseinheit (21) angepasst ist, die zweite Route (42) gleichzeitig mit der Bereitstellung der Information (51) an den Nutzer betreffend die erste Route (41) zu berechnen.

5. Navigationssystem gemäß einem der Ansprüche 1 bis 4, wobei die Routenverarbeitungseinheit (21) die zweite Route (42) unter der Annahme berechnet, dass an dem Manövrierpunkt (30) die Bewegung in der zweiten Richtung (32) durch den Nutzer nicht vorgenommen wird.

6. Navigationssystem gemäß einem der Ansprüche 1 bis 5, wobei die Verzögerungsberechnungseinheit (22) angepasst ist, den vorbestimmten Referenzwert abhängig von wenigstens einem justierbaren Parameter einzustellen, welcher bezeichnend ist für wenigstens eines der folgenden:
- ein Zustand oder ein Typ einer Straße, auf der sich der Nutzer fortbewegt,
- eine Verkehrssituation auf einer Straße, auf der sich der Nutzer fortbewegt,
- einen Fahrzeugtyp, den der Nutzer zur Fortbewegung benutzt.

7. Navigationssystem nach einem der Ansprüche 1 bis 6, wobei die Verzögerungsberechnungseinheit (22) angepasst ist, den vorbestimmten Referenzwert abhängig von wenigstens einem bestimmten Parameter dynamisch einzustellen, welcher bezeichnend ist für wenigstens eines der folgenden:
- ein gegenwärtiger Zustand einer Straße, auf der sich der Nutzer fortbewegt,
- eine Straßenklasse einer Straße, auf welcher der Nutzer sich fortbewegt,
- eine gegenwärtige Verkehrssituation auf einer Straße, auf welcher der Nutzer sich fortbewegt,
- eine Tageszeitsituation,
- ein gegenwärtiger Witterungszustand.

8. Navigationssystem gemäß Anspruch 7, wobei die Verzögerungsberechnungseinheit (22) angepasst ist, den vorbestimmten Referenzwert in wenigstens einer der folgenden Situationen zu reduzieren:
- der gegenwärtige Zustand der Straße, auf welcher der Nutzer sich fortbewegt, ist nass und/oder rutschig,
- die Straßenklasse der Straße, auf welcher der Nutzer sich fortbewegt, zeigt eine niedrigere Straßenklasse einer Mehrzahl von Straßenklassen an,
- die gegenwärtige Verkehrssituation auf der Straße, auf welcher der Nutzer sich fortbewegt, bezeichnet starken Verkehr,
- die Tageszeitsituation ist bezeichnend für eine Dämmerungs- oder Nachtsituation,
- der gegenwärtige Witterungszustand ist bezeichnend für Regen und/oder eine Temperatur nahe des Gefrierpunkts.

9. Navigationssystem gemäß einem der Ansprüche 6 bis 8, wobei die Verzögerungsberechnungseinheit (22) koppelbar ist mit wenigstens einer der folgenden Komponenten:
- einem Regensensor (15) zur Bestimmung des gegenwärtigen Zustands der Straße, auf welcher der Nutzer sich fortbewegt, oder des gegenwärtigen Witterungszustands,
- einem Temperatursensor (14) zur Bestimmung des gegenwärtigen Zustands der Straße, auf welcher der Nutzer sich fortbewegt, oder des gegenwärtigen Wtterungszustands,
- der Routenverarbeitungseinheit (21) zur Bestimmung der Straßenklasse der Straße, auf welcher der Nutzer sich fortbewegt,
- einer Verkehrsinformations-Empfangseinheit (17) zur Bestimmung der gegenwärtigen Verkehrssituation auf der Straße, auf welcher der Nutzer sich fortbewegt,
- einem Helligkeitssensor (16) zur Bestimmung der Tageszeitsituation.

10. Navigationssystem gemäß einem der Ansprüche 1 bis 9, wobei die Routenverarbeitungseinheit (21) angepasst ist, Information an den Nutzer betreffend eine zusätzliche Zeit und/oder zusätzliche Distanz mit Bezug auf die erste Route (41) bereitzustellen, die für den Nutzer notwendig ist, wenn er sich auf der zweiten Route (42) fortbewegt.

11. Navigationssystem gemäß einem der Ansprüche 1 bis 10, wobei die Routenverarbeitungseinheit (21) angepasst ist, Daten an eine Darstellungsvorrichtung (18) bereitzustellen, um graphische Information (51, 52) an den Nutzer betreffend die erste Route (41) und die zweite Route (42) bereitzustellen.

12. Navigationssystem gemäß einem der Ansprüche 1 bis 11, wobei die Routenverarbeitungseinheit (21) angepasst ist, die Information (52) betreffend die zweite Route (42) gleichzeitig mit der Information (51) betreffend die erste Route (41) bereitzustellen in dem Fall, dass der Verzögerungswert den vorbestimmten Referenzwert überschreitet, bevor der Manövrierpunkt (30) erreicht wird.

13. Navigationssystem gemäß einem der Ansprüche 1 bis 11, wobei die Routenverarbeitungseinheit (21) angepasst ist, von einem Bereitstellen der Information (51) betreffend die erste Route (41) auf ein Bereitstellen der Information (52) betreffend die zweite Route (42) umzuschalten in dem Fall, dass der Verzögerungswert den vorbestimmten Referenzwert überschreitet, bevor der Manövrierpunkt (30) erreicht wird.

14. Navigationssystem gemäß einem der Ansprüche 1 bis 13, wobei das Navigationssystem (1) in einem Fahrzeug implementiert ist.

15. Verfahren zur Bereitstellung von Routenführung an einen Nutzer, aufweisend:
- Berechnen einer ersten Route (41) zu einem Ziel und Bereitstellen von Information (51) an den Nutzer betreffend die erste Route, wobei dabei wenigstens ein Manövrierpunkt (30) bestimmt wird, an welchem der Nutzer ein Manöver von einer Bewegung in einer ersten Richtung (31) zu einer Bewegung in einer zweiten Richtung (32) machen muss, **gekennzeichnet durch**
- Berechnen eines Verzögerungswerts, welcher bei einer gegenwärtigen Geschwindigkeit des Nutzers für den Nutzer notwendig ist, das Manöver mit einer reduzierten Geschwindigkeit vorzunehmen, indem eine Distanz der gegenwärtigen Position (60) des Nutzers bis zu dem Manövrierpunkt (30) und die gegenwärtige Bewegungsgeschwindigkeit aufgenommen werden,
- Bestimmen, ob der Verzögerungswert einen vorbestimmten Referenzwert überschreitet,
- Berechnen einer zweiten Route (42) zu dem Ziel als eine Alternative zu der ersten Route (41), wobei gemäß der zweiten Route (42) der Nutzer an dem Manövrierpunkt (30) das Manöver nicht vornehmen muss,
- Bereitstellen von Information (52) an den Nutzer betreffend die zweite Route (42) in dem Fall, dass der Verzögerungswert den vorbestimmten Referenzwert überschreitet.

## Revendications

1. Système de navigation (1) incluant une fonction de guidage routier, comprenant
une unité de traitement de route (21) adaptée pour calculer une première route (41) vers une destination et fournir une information (51) à l'utilisateur concernant la première route (41), déterminant ainsi au moins un point de manoeuvre (30) en lequel l'utilisateur doit effectuer une manoeuvre d'un déplacement dans une première direction (31) vers un déplacement dans une seconde direction (32),
**caractérisé par**
une unité de calcul de décélération (22) adaptée pour recevoir une information concernant l'au moins un point de manoeuvre (30), et qui est adaptée pour calculer une valeur de décélération qui est, à une vitesse de l'utilisateur, nécessaire à l'utilisateur pour effectuer la manoeuvre à une vitesse réduite en contrôlant une distance de la position de l'utilisateur (60) au point de manoeuvre (30) et la vitesse de déplacement,
dans lequel l'unité de calcul de décélération (22) est adaptée pour déterminer si la valeur de décélération dépasse une valeur de référence prédéterminée,
dans lequel l'unité de traitement de route (21) est adaptée pour calculer une seconde route (42) vers la destination comme une alternative à la première route (41), dans lequel selon la seconde route (42) l'utilisateur n'a pas besoin d'effectuer la manoeuvre au niveau du point de manoeuvre (30),
dans lequel l'unité de traitement de route (21) est adaptée pour fournir une information (52) à l'utilisateur concernant la seconde route (42) dans le cas où la valeur de décélération dépasse la valeur de référence prédéterminée.

2. Système de navigation selon la revendication 1, dans lequel l'unité de calcul de décélération (22) est couplée avec un capteur de vitesse de véhicule (13) pour déterminer la vitesse de déplacement du déplacement de l'utilisateur.

3. Système de navigation selon la revendication 1 ou 2, dans lequel
l'unité de traitement de route (21) est adaptée pour calculer la seconde route (42) dans le cas où la valeur de décélération dépasse la valeur de référence prédéterminée.

4. Système de navigation selon la revendication 1 ou 2, dans lequel
l'unité de traitement de route (21) est adaptée pour calculer la seconde route (42) tout en fournissant l'information (51) à l'utilisateur concernant la première route (41).

5. Système de navigation selon l'une quelconque des revendications 1 à 4, dans lequel
l'unité de traitement de route (21) calcule la seconde route (42) en supposant qu'au point de manoeuvre (30) le déplacement dans la seconde direction (32) est n'est pas pris par l'utilisateur.

6. Système de navigation selon l'une quelconque des revendications 1 à 5, dans lequel
l'unité de calcul de décélération (22) est adaptée pour régler la valeur de référence prédéterminée selon au moins un paramètre ajustable qui est indicatif d'au moins un parmi les suivants :
un état ou un type de route sur laquelle l'utilisateur roule,
une situation de trafic sur une route sur laquelle l'utilisateur roule,
un type de véhicule que l'utilisateur utilise pour rouler.

7. Système de navigation selon l'une quelconque des revendications 1 à 6, dans lequel
l'unité de calcul de décélération (22) est adaptée pour régler dynamiquement la valeur de référence prédéterminée en fonction d'au moins un paramètre déterminé qui est indicatif d'au moins l'un parmi les suivants :
un état d'une route sur laquelle l'utilisateur roule,
une classe de route d'une route sur laquelle l'utilisateur roule,
une situation de trafic sur la route sur laquelle l'utilisateur roule,
un moment de la journée,
une condition météorologique.

8. Système de navigation selon la revendication 7, dans lequel l'unité de calcul de décélération (22) est adaptée pour réduire la valeur de référence prédéterminée dans au moins l'une des situations suivantes :
l'état de la route sur laquelle l'utilisateur avance est mouillé et/ou glissant,
la classe de route de la route sur laquelle l'utilisateur roule indique une classe de route inférieure parmi une pluralité de classes de route,
la situation de trafic sur la route sur laquelle l'utilisateur roule indique un trafic élevé,
la situation de moment de la journée indique une situation de crépuscule ou de nuit,
la condition météorologique est indicative de pluie et/ou d'une température proche du point de gelée.

9. Système de navigation selon l'une quelconque des revendications 6 à 8, dans lequel
l'unité de calcul de décélération (22) peut être couplée avec au moins l'un des composants suivants :
un capteur de pluie pour déterminer l'état de la route sur laquelle l'utilisateur roule ou l'état météorologique,
un capteur de température (14) pour déterminer l'état de la route sur laquelle l'utilisateur roule ou l'état météorologique,
l'unité de traitement de route (21) pour déterminer la classe de route de la route sur laquelle l'utilisateur roule,
une unité de réception d'information concernant le trafic (17) pour déterminer la situation de trafic sur la route sur laquelle l'utilisateur roule,
un capteur de luminosité (16) pour déterminer la situation du moment de la journée.

10. Système de navigation selon l'une quelconque des revendications 1 à 9, dans lequel
l'unité de traitement de route (21) est adaptée pour fournir de l'information à l'utilisateur concernant un temps supplémentaire et/ou une distance supplémentaire nécessaire à l'utilisateur avançant sur la seconde route (42) par rapport à la première route (41).

11. Système de navigation selon l'une quelconque des revendications 1 à 10, dans lequel
l'unité de traitement de route (21) est adaptée pour fournir des données à un dispositif d'affichage (18) pour fournir une information graphique (51, 52) à l'utilisateur concernant la première route (41) et la seconde route (42).

12. Système de navigation selon l'une quelconque des revendications 1 à 11, dans lequel
l'unité de traitement de route (21) est adaptée pour fournir l'information (52) concernant la seconde route (42) tout en fournissant l'information (51) concernant la première route (41) dans l'éventualité où la valeur de décélération dépasse la valeur de référence prédéterminée avant d'atteindre le point de manoeuvre (30).

13. Système de navigation selon l'une quelconque des revendications 1 à 11, dans lequel
l'unité de traitement de route (21) est adaptée pour commuter entre fournir l'information (51) concernant la première route (41) et fournir l'information (52) concernant la seconde route (42) dans l'éventualité où la valeur de décélération dépasse la valeur de référence prédéterminée avant d'atteindre le point de manoeuvre (30).

14. Système de navigation selon l'une quelconque des revendications 1 à 13, dans lequel le système de navigation (1) est mis en oeuvre sur un véhicule.

15. Procédé pour fournir un guidage routier à un utilisateur, comprenant
de calculer une première route (41) vers une destination et de fournir une information (51) à l'utilisateur concernant la première route, déterminant ainsi au moins un point de manoeuvre (30) en lequel l'utilisateur doit effectuer une manoeuvre d'un déplacement dans une première direction (31) vers un déplacement dans une seconde direction (32),
**caractérisé par**
calculer une valeur de décélération qui est, à une vitesse de l'utilisateur, nécessaire à l'utilisateur pour effectuer la manoeuvre à une vitesse réduite en contrôlant une distance de la position de l'utilisateur (60) au point de manoeuvre et la vitesse de déplacement,
déterminer si la valeur de décélération dépasse une valeur de référence prédéterminée,
calculer une seconde route (42) vers la destination comme une alternative à la première route (41), où selon la seconde route (42) l'utilisateur n'a pas besoin d'effectuer la manoeuvre au point de manoeuvre (30),
dans l'éventualité où la valeur de décélération dépasse la valeur de référence prédéterminée, fournir l'information (52) à l'utilisateur concernant la seconde route (42).
